# EUROPÄISCHE PATENTSCHRIFT

(11) **EP 2 226 770 B1**
(45) Veröffentlichungstag und Bekanntmachung des Hinweises auf die Patenterteilung: **23.05.2012**
(21) Anmeldenummer: 10002046.0
(22) Anmeldetag: 01.03.2010
(51) Int. Cl.: G07F 7/06, B07C 5/12, B30B 9/32

(54) **Vorrichtung zum Sortieren von Gebinden**
Container sorting device
Dispositif destiné à trier des gerbes

(30) Priorität: 04.03.2009 DE 102009011716
(43) Veröffentlichungstag der Anmeldung: 08.09.2010
(73) Patentinhaber: Wincor Nixdorf International GmbH, 33106 Paderborn (DE)
(72) Erfinder: Hartung, Domenic, 99192 Molsdorf (DE)

(56) Entgegenhaltungen:
- WO-A1-82/01697
- WO-A1-2005/003003
- DE-A1- 10 055 207
- DE-A1- 10 340 037
- FR-A2- 2 588 401
- NL-A- 7 707 169
- US-A- 4 643 291

## Beschreibung

Die Erfindung betrifft eine Vorrichtung zum Sortieren von Gebinden mit einem Sortiermodul, das zwischen einer das Gebinde zuführenden Zuführbahn und einer Mehrzahl von Abfuhrbahnen angeordnet und mittels einer Antriebseinheit antreibbar ist, wobei das Sortiermodul ein Stellelement mit wenigstens einer Leitfläche aufweist zur Führung des Gebindes in Richtung einer vorgegebenen Abfuhrbahn und wobei das Stellelement senkrecht zu einer die Zuführbahn und die Abfuhrbahnen aufnehmenden Sortierebene um eine Schwenkachse drehbar angeordnet ist.

Aus der DE 100 55 207 A1 ist eine Sortiervorrichtung für einen Leergutrücknahmeautomaten mit einem rohrförmigen Sortiermodul bekannt, in das zu sortierende Behälter auf einem Förderband liegend eingebracht werden. Das rohrförmige Sortiermodul ist um eine senkrecht zum Transportband vorgesehene Achse drehbar gelagert. Mithilfe des rohrförmigen Sortiermoduls kann der Behälter einer von drei vorgesehenen Abfuhrbahnen zugeführt werden, die in Bezug auf das Behälter zuführende Förderband eine Winkellage von 90°, 180° und 270° aufweisen. Nachteilig hierbei ist, dass die Behälter in maximal drei Fraktionen aufgeteilt werden können. Die Aufteilung in vier oder mehr Fraktionen macht eine Reihenschaltung einer Mehrzahl von Sortiervorrichtungen erforderlich, woraus Nachteile in Bezug auf Bauraum und Kosten erwachsen. Ferner ist der Sortiervorgang sehr zeitaufwendig, da das seitliche Abtransportieren eines Behälters ein zweimaliges Drehen der Sortiereinheit erforderlich macht. Der Durchsatz ist damit stark limitiert, und wertvolle Zeit im Rücknahmeprozess geht verloren.

In der Druckschrift WO 82/01697 wird ein über einem Laufband angeordnetes mit einer zentralen Drehachse versehenes Rad mit auf seinem Umfang angeordneten Mulden zur Aufnahme von Flaschen beschrieben. Die willkürlich auf dem Laufband verteilten Flaschen werden in die Mulden des Rades geschoben und durch die Raddrehung auf eine Seite des Laufbandes versetzt und linear angeordnet. Eine Kriteriensortierung findet nicht statt.

In der WO 2005/003003 wird eine Sortiervorrichtung für Leergut beschrieben, das auf einem Förderband transportiert wird. Das Leergut wird hierbei seitlich vom Förderband ausgeschleust, indem eine an einem seitlichen Drehpunkt aufgehängte Platte in den Transportweg geschwenkt wird. Durch unterschiedliche Drehwinkel können typischerweise maximal zwei Ausschleuswege gebildet werden. Weitere Ausschleuswege könne nur durch Aneinanderreihen dieser Sortiervorrichtungen gebildet werden. Eine solche Vorrichtung baut relativ voluminös.

Die US 4,643,291 beschreibt einen linear agierendes Sortiererpaddel insbesondere für Gepäckstücke. Der Antrieb ist hierbei dezentral angeordnet, wodurch dieser seitlich eine zusätzliche Störkontur bewirkt. Des Weiteren wird durch das Sortierpaddel keine Mehrzahl an Abfuhrbahnen bedient sondern lediglich eine. Die Sortiereinheit ist hierbei seitlich und nicht zwischen Zuführbahn und Abfuhrbahnen angeordnet.

Aufgabe der vorliegenden Erfindung ist es, eine Sortiervorrichtung derart weiterzubilden, dass mehrere Gebinde auf engem Raum innerhalb kurzer Zeit in eine Mehrzahl von Fraktionen verteilt werden können.

Zur Lösung dieser Aufgabe ist die Erfindung in Verbindung mit dem Oberbegriff des Patentanspruchs 1 dadurch gekennzeichnet, dass die Übertragungseinheit (13) ein mit der Antriebseinheit (10) gekoppeltes erstes Führungsmittel (29) und ein mit dem Stellelement (11, 12) drehfest verbundenes zweites Führungsmittel (28) aufweist, wobei das zweite Führungsmittel (28) drehbar an dem ersten Führungsmittel (29) gehalten ist, und dass die Übertragungseinheit (13) ein ortsfest angeordnetes drittes Führungsmittel (27) aufweist, das derart mit dem zweiten Führungsmittel (28) zusammenwirkt, dass das Stellelement (11, 12) zwischen der ersten Sortierstellung und der zweiten Sortierstellung um einen vorgegebenen Winkel verdreht ist und dass die Übertragungseinheit als ein Umlaufgetriebe (13), die ortsfeste Kulisse (27) als ein Sonnenrad und das zweite Führungsmittel (28) als ein um das Sonnenrad (ortsfeste Kulisse 27) kreisendes, um die Schwenkachse (D1, D2) des Stellelements (11, 12) drehendes Planetenrad (28) ausgebildet ist, wobei das zweite Führungsmittel (28) über das als ein Hebel (29) ausgebildetes erste Führungsmittel mit einer Abtriebswelle (16) der Antriebseinheit (10) verbunden ist.

Der besondere Vorteil der Erfindung besteht darin, dass Gebinde mittels einer einzigen Sortiereinheit in eine Mehrzahl von Fraktionen aufgeteilt werden können. Kerngedanke der Erfindung ist es hierbei, eine Drehbewegung des Stellelements um eine körpereigene Schwenkachse mit einer translatorischen oder rotatorischen Bewegung derselben Schwenkachse derart zu koppeln, dass durch die Lageveränderung des Stellelements auf engstem Raum eine Vielzahl von Sortierwegen gebildet werden können. Aufgrund der Kopplung der Drehbewegung des Stellelements um die Schwenkachse mit der Bewegung der Schwenkachse selbst kann eine einzige Antriebseinheit vorgesehen werden. Die Sortiereinheit ist demzufolge kostengünstig herstellbar und durch ein hohes Maß an Zuverlässigkeit hinsichtlich der korrekten Positionierung des Stellelements gekennzeichnet.

Gemäß der Erfindung weist die Übertragungseinheit ein mit der Antriebseinheit gekoppeltes erstes Führungsmittel und ein mit dem Stellelement drehfest verbundenes zweite Führungsmittel auf, welches an dem ersten Führungsmittel drehbar gehalten ist. Ferner weist die Übertragungseinheit ein ortsfestes drittes Führungsmittel auf, welches derart mit dem zweiten Führungsmittel zusammenwirkt, dass das Stellelement zwischen einer ersten Sortierstellung und einer zweiten Sortierstellung um einen vorgegebenen Winkel verdreht ist. Vorteilhaft ist die Übertragungseinheit hierbei durch lediglich drei Führungsmittel gebildet, so dass die gekoppelte Bewegung des Stellelements auf besonders einfache Weise bewirkt wird. Der einfache Aufbau bedingt hierbei eine gute kinematische Beherrschbarkeit des Übertragungsmittels, so dass eine Kontrolle bezüglich des Erreichens einer Sortierstellung beispielsweise allein anhand der Überwachung eines Drehwinkels der Antriebseinheit möglich ist.

Nach einer Weiterbildung der Erfindung kann das dritte Führungsmittel als eine sich entlang der Führungsbahn erstreckende Kulisse ausgebildet sein, wobei das zweite Führungsmittel form- oder kraftschlüssig an der Kulisse geführt ist. Vorteilhaft wird das drehfest mit dem zweiten Führungsmittel verbundene Stellelement hierdurch mechanisch entlang der Führungsbahn bewegt, so dass eine exakte Positionierung gewährleistet ist.

Gemäß der Erfindung ist die Übertragungseinheit als ein Umlaufgetriebe ausgebildet. Die ortsfeste Kulisse dient als ein Sonnenrad des Umlaufgetriebes, das zweite Führungsmittel als ein um das Sonnenrad kreisendes und um die Schwenkachse des Stellelements drehendes Planetenrad. Das als ein Hebel ausgebildete dritte Funktionsmittel der Übertragungseinheit verbindet das zweite Führungsmittel mit einer Abtriebswelle der Antriebseinheit. Es handelt sich bei einem Umlaufgetriebe um ein wohlbekanntes Maschinenelement, das durch eine hohe Funktionssicherheit und Präzision gekennzeichnet ist. Mittels eines Umlaufgetriebes kann eine sehr hohe Übersetzung realisiert werden, so dass die Stellbewegung - bei den hier vorliegenden vergleichsweise kleinen Stellkräften - sehr schnell ausgeführt werden kann. Dadurch kann der Sortiervorgang beschleunigt werden, womit sich der Durchsatz und die Wirtschaftlichkeit des Rücknahmeautomaten sowie der Bedienkomfort erhöhen. Ferner baut ein Umlaufgetriebe sehr kompakt, so dass das Sortiermodul ebenfalls sehr kompakt ausgeführt werden kann und eine Sortierung auf sehr engem Raum möglich ist. Sind darüber hinaus das Sonnenrad und die Abtriebswelle der Antriebseinheit koaxial zu einer Zentralachse der Sortiereinheit angeordnet, kann der Hebel eine konstante Länge aufweisen, so dass sich eine konstruktiv besonders einfache Lösung ergibt. Hierbei kann das Planetenrad als Reib- oder Zahnrad ausgebildet sein. Es liegt mit seiner Mantelfläche an der Kulisse an und rollt bei einer translatorischen oder rotatorischen Bewegung der Schwenkachse entlang der Führungsbahn auf der Kulisse ab. Hierdurch wird das Stellelement um einen zu dem Maß der Bewegung entlang der Führungsbahn korrespondierenden Winkel um die Schwenkachse gedreht. Die Führungsbahn bzw. -kulisse kann sich geradlinig erstrecken oder zumindest abschnittsweise gebogen ausgeführt sein.

Nach einer Weiterbildung der Erfindung sind das Sonnenrad und das Planetenrad als Zahnräder ausgebildet. Durch das Vorsehen einer derartigen Verzahnung ist das Planetenrad formschlüssig und damit spielfrei entlang der Führungsbahn bewegbar. Das Sortiermodul ist vor einer plötzlichen bzw. schleichenden Dejustage, beispielsweise aufgrund von Schlupf, geschützt, so dass das Stellelement sicher in der jeweiligen Sortierstellung positionierbar ist.

Nach einer Weiterbildung der Erfindung weist das Sortiermodul zwei Stelielemente auf, die winkel- und drehrichtungsgleich verschwenkt geführt werden. Den zwei Stellelementen kann hierbei jeweils ein Planetenrad zugeordnet sein, welches drehbar an einem gemeinsamen Hebel gehalten und/oder entlang einer gemeinsamen Kulisse geführt ist. Vorteilhaft kann durch das Vorsehen von zwei Stellelementen die Anzahl möglicher Sortierungen erhöht und eine Aufteilung der Gebinde in beispielsweise bis zu fünf Fraktionen ermöglicht werden. Indem die zwei Stellelemente an einem gemeinsamen Hebel drehbar gehalten und/oder entlang einer gemeinsamen Kulisse geführt sind, kann die Übertragungseinheit beispielsweise als ein Umlaufgetriebe mit zwei Planetenrädern ausgebildet sein. Trotz der Verteilung des Gebindes auf bis zu fünf Abfuhrbahnen baut das Sortiermodul hierdurch äußerst kompakt. Ferner ist durch die mechanische Zwangskopplung der beiden Stellelemente eine hohe Zuverlässigkeit bei der Sortierung der Gebinde gewährleistet, da unvorhergesehene Schaltzustände und damit undefinierte Sortierwege vermieden werden.

Nach einer Weiterbildung der Erfindung besitzt das Stellelement eine in der Sortierebene im Wesentlichen dreieckförmige Kontur. Die Dreieckseiten bilden hierbei drei Leitflächen, von denen eine erste Leitfläche und eine dritte Leitfläche eben ausgebildet und lotrecht zueinander angeordnet sind. Eine die erste Leitfläche und die dritte Leitfläche verbindende zweite Leitfläche ist konkav geformt. Sie bildet mit der ersten Leitfläche einen langgestreckten, spitz zulaufenden Eckbereich. Vorteilhaft kann durch die im Wesentlichen dreieckförmige Kontur der Stellelemente eine Mehrzahl von Leitflächen an einem Stellelement angeordnet werden, die in Abhängigkeit von der Drehstellung des Stellelements in bzw. außer Eingriff sind. Die Kontur der Leitflächen kann dabei so bestimmt werden, dass ein auf der Zuführbahn zugeführtes Gebinde wahlweise einer von bis zu fünf Abfuhrbahnen zuführbar ist, die in der Sortierebene winkelversetzt zur Zuführbahn angeordnet sind. Hierbei werden je nach Lage der gewünschten Abfuhrbahn unterschiedlich geformte Leitflächen des Stellelements in Eingriff gebracht, so dass das Gebinde in dem Sortiermodul in unterschiedlichem Maße umgelenkt wird.

Nach einer Weiterbildung der Erfindung sind das erste und das zweite Stellelement in einer Grundstellung im Wesentlichen symmetrisch bezüglich einer senkrecht zu der Sortierebene orientierten und eine Zuführrichtung aufnehmende Mittelebene ausgebildet. Vorteilhaft kann eine Aufteilung der Gebinde in eine Mehrzahl von Fraktionen aufgrund des bezüglich der Mittelebene symmetrischen Aufbaus des Sortiermoduls dann besonders einfach erfolgen, wenn auch die Abfuhrbahnen bezüglich derselben Mittelebene symmetrisch angeordnet sind. Der Konstruktions- und Fertigungsaufwand lässt sich durch die Verwendung einer großen Zahl von Gleichteilen signifikant reduzieren.

Nach einer Weiterbildung der Erfindung ist die Geometrie des Ritzels auf die Geometrie der Steuerkulisse abgestimmt und/oder weisen die Leitflächen des ersten und zweiten Steuerelements derart höhenversetzt zueinander angeordnete, sich senkrecht zu der Schwenkebene erstreckende Ausnehmungen und Zähne auf. Hierdurch können die Stellelemente bis zu fünf Sortierstellungen einnehmen, in denen das Gebinde in Abhängigkeit von der Drehstellung der Abtriebswelle einer von bis zu fünf Abfuhrbahnen zugeführt wird: In der ersten Sortierstellung wird das Gebinde entlang der zweiten Leitfläche des mit dem spitzen Endbereich über die Zuführbahn geschwenkten zweiten Stellelements und der in Transportrichtung vor dem spitzen Endbereich des zweiten Stellelements angeordneten, eine dritte Abfuhrbahn sperrenden ersten Leitfläche des ersten Stellelements der ersten Abfuhrbahn zugeführt. In der zweiten Sortierstellung wird das Gebinde entlang der zweiten Leitfläche des mit dem spitzen Endbereich über die Zuführbahn geschwenkten ersten Stellelements und der in Transportrichtung vor dem spitzen Endbereich des ersten Stellelements angeordneten, eine vierte Abfuhrbahn sperrenden ersten Leitfläche des zweiten Stellelements der zweiten Abfuhrbahn zugeführt. In der dritten Sortierstellung wird das Gebinde unter Eingriff der Zähne des ersten Stellelements in die Ausnehmung des zweiten Stellelements und der Zähne des zweiten Stellelements in die Ausnehmungen des ersten Stellelements entlang der über die Zuführbahn geschwenkten dritten Leitfläche des ersten Stellelements und/oder der dritten Leitfläche des zweiten Stellelements der dritten Abfuhrbahn zugeführt. Die im Eingriff befindlichen Leitflächen bilden hierbei eine gemeinsame, eben ausgebildete Leitfläche. In Transportrichtung gesehen ist hierbei die Schwenkachse des zweiten Stellelements vor der Schwenkachse des ersten Stellelements angeordnet. In der vierten Sortierstellung wird das Gebinde unter Eingriff der Zähne des ersten Stellelements in die Ausnehmung des zweiten Stellelements und der Zähne des zweiten Stellelements in die Ausnehmung des ersten Stellelements entlang der über die Zuführbahn geschwenkten dritten Leitfläche des ersten Stellelements und/oder der dritten Leitfläche des zweiten Stellelements der vierten Abfuhrbahn zugeführt. Wie in der dritten Sortierstellung bilden die Leitflächen der beiden Stellelemente auch in der vierten Sortierstellung eine gemeinsame, im Wesentlichen eben ausgebildete Leitfläche. Die Schwenkachse des zweiten Stellelements ist hierbei in Transportrichtung hinter der Schwenkachse des ersten Stellelements angeordnet. Die gemeinsamen Leitflächen sind in der dritten und vierten Sortierstellung bezüglich der Mittelebene gespiegelt angeordnet, so dass das Gebinde entlang der Leitfläche Abfuhrbahnen zuführbar ist, die auf unterschiedlichen Seiten der Mittelebene angeordnet sind. In der fünften Sortierstellung, die der Grundstellung entspricht, wird das Gebinde zwischen der ersten Leitfläche des ersten Stellelements und der ersten Leitfläche des zweiten Stellelements hindurch der fünften Abfuhrbahn zuführbar ist. Vorteilhaft kann hierdurch unter Wahrung der durch den symmetrischen Aufbau bedingten Vorteile ein auf der Zuführbahn zugeführtes Gebinde einer von bis zu fünf Abfuhrbahnen zugeführt werden. Hierbei korrespondieren die erste Sortierstellung und die zweite Sortierstellung ebenso wie die dritte Sortierstellung und die vierte Sortierstellung dahingehend, dass zum einen die erste Abfuhrbahn bezüglich der Mittelebene symmetrisch zur zweiten Abfuhrbahn und die dritte Abfuhrbahn bezüglich der Mittelebene symmetrisch zur vierten Abfuhrbahn angeordnet sind. Zum anderen sind das erste und zweite Stellelement in der ersten Sortierstellung symmetrisch bezüglich der Mittelebene zu dem zweiten respektive ersten Stellelement in der zweiten Sortierstellung positioniert. Die gleichen Symmetriezusammenhänge gelten für das erste und zweite Stellelement auch in der dritten und vierten Sortierstellung.

Nach einer Weiterbildung der Erfindung ist das Sortiermodul aus der Grundstellung durch Drehen der Abtriebswelle um maximal +/- 90° in jede beliebige andere Sortierstellung verbringbar. Vorteilhaft ist hierdurch ein schnelles Schwenken des Sortiermoduls möglich, wodurch der Durchsatz und die Wirtschaftlichkeit der Vorrichtung weiter verbessert und der Bedienkomfort weiter erhöht werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer Vorrichtung zum Sortieren von Gebinden in einer Grundstellung,
- Figur 2: eine Draufsicht auf die erfindungsgemäße Vorrichtung gemäß Figur 1,
- Figur 3: eine Draufsicht auf die erfindungsgemäße Vorrichtung in einer ersten Sortierstellung,
- Figur 4: eine Draufsicht auf die erfindungsgemäße Vorrichtung in einer zwei- ten Sortierstellung,
- Figur 5: eine Draufsicht auf die erfindungsgemäße Vorrichtung in einer dritten Sortierstellung und
- Figur 6: eine Draufsicht auf die erfindungsgemäße Vorrichtung in einer vier- ten Sortierstellung.

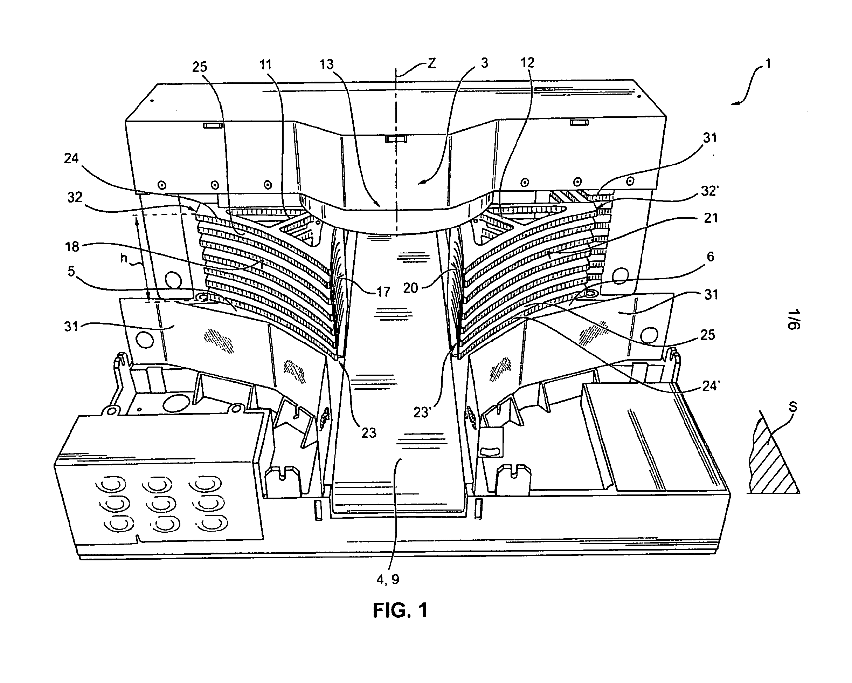

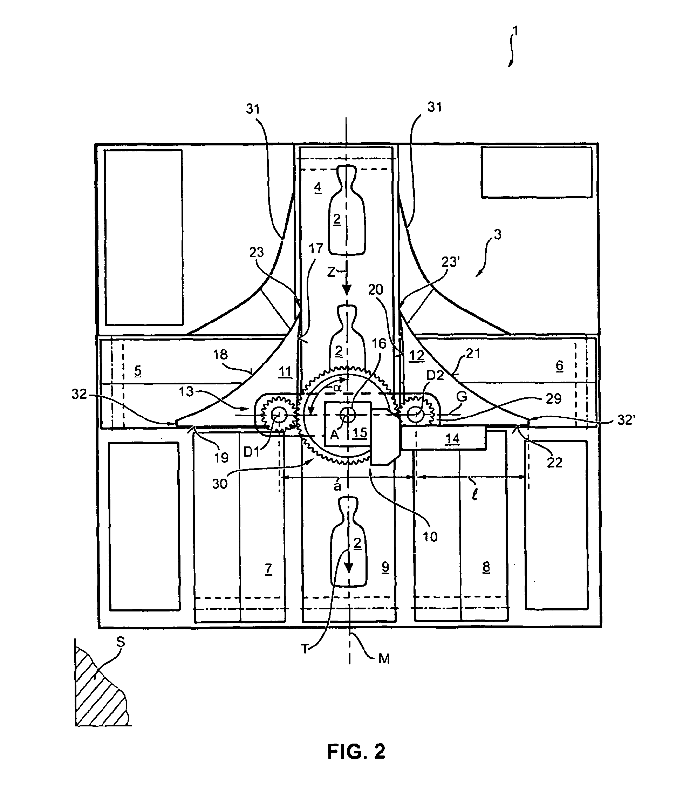

Eine Vorrichtung 1 zum Sortieren von Gebinden 2 gemäß den Figuren 1 und 2 weist ein Sortiermodul 3 auf, mittels dessen ein auf einer Zuführbahn 4 in Zuführrichtung Z zugeführten Gebinde 2 einer von mehreren Abfuhrbahnen 5, 6, 7, 8, 9 zuführbar ist. Das Sortiermodul 3 ist hierzu zwischen der Zuführbahn 4 und den Abfuhrbahnen 5, 6, 7, 8, 9 angeordnet. Es besteht im Wesentlichen aus einer Antriebseinheit 10, einem ersten Stellelement 11, einem zweiten Stellelement 12 und einer Übertragungseinheit 13. Die Übertragungseinheit 13 ist zwischen der Antriebseinheit 10 einerseits und dem ersten und zweiten Stellelement 11, 12 andererseits angeordnet. Sie dient dazu, eine Antriebsbewegung der Antriebseinheit 10 auf die beiden Stellelemente 11, 12 zu übertragen.

Die Zuführbahn 4 sowie die Abfuhrbahnen 5, 6, 7, 8, 9 sind als Endlosbänder aufweisende Fördermittel ausgebildet und in einer gemeinsamen, die Zuführrichtung Z aufnehmenden Sortierebene S angeordnet. Da die fünfte Abfuhrbahn 9 in Zuführrichtung Z gesehen vor der Zuführbahn 4 angeordnet ist und sich winkelgleich an diese anschließt, sind die Zuführbahn 4 und die fünfte Abfuhrbahn 9 im vorliegenden Ausführungsbeispiel durch ein gemeinsames Endlosband gebildet. Alternativ könnten statt des gemeinsamen Endlosbandes zwei getrennte Fördermittel vorgesehen sein zur separaten Ausbildung der Zuführbahn 4 und der unmittelbar vor dieser angeordneten fünften Abfuhrbahn 9.

Die erste Abfuhrbahn 5 und die zweite Abfuhrbahn 6 sind - um 90° bzw. 270° gedreht zur Zuführrichtung Z - gegenüberliegend auf zwei Seiten der Zuführbahn 4 angeordnet. In Zuführrichtung Z gesehen vor der ersten Abfuhrbahn 5 und der zweiten Abfuhrbahn 6 sind die dritte Abfuhrbahn 7 und die vierte Abfuhrbahn 8 auf zwei gegenüberliegenden Seiten der fünften Abfuhrbahn 9 angeordnet. Die dritte, vierte und fünfte Abfuhrbahn 7, 8, 9 sind hierbei parallel zueinander in Zuführrichtung Z orientiert angeordnet. Die erste Abfuhrbahn 5 und die dritte Abfuhrbahn 7 sind auf der ersten Seite und die zweite Abfuhrbahn 6 sowie die vierte Abfuhrbahn 8 auf der der ersten Seite gegenüberliegenden zweiten Seite der Zuführbahn 4 angeordnet. Hierdurch ergibt sich eine Symmetrie in der Anordnung der Fördermittel (Zuführbahn 4, Abfuhrbahnen 5, 6, 7, 8, 9) bezüglich einer die Zuführrichtung Z aufnehmenden und senkrecht zur Sortierebene S orientierten Mittelebene M.

Die Antriebseinheit 10 ist im vorliegenden Ausführungsbeispiel durch einen Elektromotor 14 und ein nachgeschaltetes Winkelgetriebe 15 gebildet. Das Winkelgetriebe 15 weist eine Abtriebswelle 16 auf, die in der Mittelebene M senkrecht zur Sortierebene S verläuft und eine Zentralachse A des Sortiermoduls 3 definiert.

Das erste Stellelement 11 und das zweite Stellelement 12 sind in einer Grundstellung der Vorrichtung gemäß den Figuren 1 und 2 symmetrisch bezüglich der Mittelebene M auf gegenüberliegenden Seiten des die Zuführbahn 4 und die fünfte Abfuhrbahn 9 bildenden Fördermittels angeordnet und im Wesentlichen baugleich ausgeführt. Sie besitzen eine in der Sortierebene S im Wesentlichen dreieckförmige Kontur. Die eine im Wesentlichen konstante Höhe h aufweisenden Dreiecksseiten jedes Stellelements 11, 12 sind als Leitflächen 17, 18, 19, 20, 21, 22 ausgebildet. Die erste Leitfläche 17 und die dritte Leitfläche 19 des ersten Stellelements 11 sind - ebenso wie die erste Leitfläche 20 und die dritte Leitfläche 22 des zweiten Stellelements 12 - im Wesentlichen eben ausgebildet und lotrecht zueinander angeordnet. Sie bilden zwei annähernd gleich lange Schenkel eines näherungsweise rechtwinkligen Dreiecks. Die zweite Leitfläche 18 des erste Stellelement 11 ist - ebenso wie die zweite Leitfläche 21 des zweiten Stellelements 12 - konkav geformt und verbindet die freien Enden der ersten Leitfläche 17 und der dritten Leitfläche 19 des ersten Stellelements 11 bzw. die erste Leitfläche 20 und die dritte Leitfläche 22 des zweiten Stellelements 12. Die erste Leitfläche 17 und die zweite Leitfläche 18 des ersten Stellelements 11 bilden hierbei - ebenso wie die erste Leitfläche 20 und die zweite Leitfläche 21 des zweiten Stellelements 12 - einen langgestreckten, spitz zulaufenden Eckbereich 23 bzw. 23'. Demgegenüber ist ein Verbindungsabschnitt 32 der zweiten Leitfläche 18 und der dritten Leitfläche 19 des ersten Stellelements 11 - ebenso wie ein Verbindungsabschnitt 32' der zweiten Leitfläche 21 und der dritten Leitfläche 22 des zweiten Stellelements 12 - stumpf ausgebildet.

Die Leitflächen 17, 18, 19 des ersten Stellelements 11 weisen senkrecht zu der Zentralachse A des Sortiermoduls 3 verlaufenden Zähne 24 und Ausnehmungen 25 auf. Die Zähne 24 und Ausnehmungen 25 des ersten Stellelements 11 sind zu korrespondierenden Zähnen 24' und Ausnehmungen 25' des zweiten Stellelements 12 derart höhenversetzt angeordnet, dass einem Zahn 24 des ersten Stellelements 11 eine Ausnehmung 25' des zweiten Stellelements 12 und einem Zahn 24' des zweiten Stellelements 12 eine Ausnehmung 25 des ersten Stellelements 11 gegenüberliegt.

In der dargestellten Grundstellung sind die jeweils ersten Leitflächen 17, 20 der Stellelemente 11, 12 einander zugewandt auf gegenüberliegenden Seiten der Mittelebene M angeordnet. Der spitze Eckbereich 23 der beiden Stellelemente 11, 12 weist gegen die Zuführrichtung Z. Die zweiten bzw. dritten Leitfläche 18, 19, 21, 22 der beiden Stellelemente 11, 12 sind auf einer der Zuführbahn 4 abgewandten Seite der ersten Leitflächen 17, 20 angeordnet. Eine Drehachse D1 des ersten Stellelements 11, um die das erste Stellelement 11 drehbar gehalten ist, erstreckt sich senkrecht zur Sortierebene S und parallel zur Zentralachse A. Sie ist im Bereich des von der ersten Leitfläche 17 und der dritten Leitfläche 19 gebildeten, näherungsweise rechten Winkels des Stellelements 11 angeordnet.

Die Schwenkachse D1 des ersten Stellelements 11 ist um eine zu derselben korrespondierende Schwenkachse D2 des zweiten Stellelements 12 sind gegenüberliegend auf den beiden Seiten der Mittelebene M angeordnet. Die zwei Schwenkachsen D1, D2 und die Zentralachse A des Sortiermoduls 3 definieren hierbei eine Sortierstellungsebene G, die in der Grundstellung gleichermaßen senkrecht zur Mittelebene M und zur Sortierebene S orientiert ist und mit der Mittelebene M einen Sortierwinkel α gleich 90° einschließt.

Die Übertragungseinheit 13 ist im vorliegenden Ausführungsbeispiel als ein Umlaufrädergetriebe ausgeführt. Sie besteht im Wesentlichen aus drei Führungsmitteln. Ein drittes Führungsmittel ist als Kulisse 27 an einem ortsfesten Sortiermodulträger 26 drehfest gehalten. Der Kulisse 27 kommt in dem Umlaufrädergetriebe 13 die Rolle eines Sonnenrades zu. Das zweite Führungsmittel 28 ist als ein Planetenrad ausgebildet, das sich an der als Sonnenrad des Umlaufrädergetriebes dienenden Kulisse 27 abstützt. Das zweite Führungsmittel 28 ist insgesamt zweimal ausgeführt, wobei je ein Planetenrad 28 in der Schwenkachse D1 drehfest mit dem ersten Stellelement 11 bzw, in der Schwenkachse D2 drehfest mit dem zweiten Stellelement 12 verbunden ist.

Die Planetenräder 28 - und damit die mit diesen drehfest verbundenen Stellelemente 11, 12 - sind an einem ersten Führungsmittel 29, das als ein Hebel ausgebildet ist, drehbar gelagert. Der Hebel 29 ist hierbei drehfest mit der Abtriebswelle 16 der Antriebseinheit 10 verbunden. Er dient zum einen dazu, die Antriebsbewegung der Antriebseinheit 10 synchron auf die beiden Stellelemente 11, 12 zu übertragen. Zum anderen trägt der Hebel 29 die beiden Stellelemente 11, 12. Auf die Darstellung des die Kulisse 27 tragenden Sortiermodulträgers 26 ist in Figur 2 zur Verdeutlichung der Orientierung der Stellelemente 11, 12 verzichtet worden.

Das Umlaufrädergetriebe 13 ist im vorliegenden Ausführungsbeispiel als ein Zahnradgetriebe ausgebildet. Hierdurch ergibt sich eine formschlüssige Übertragung der Antriebsbewegung der Antriebseinheit 10 auf die Stellelemente 11, 12, so dass die Position des Sortiermoduls 3 mit einem einzigen, nicht dargestellten Sensor erfasst werden kann und einer nicht synchronen Bewegung der Stellelemente 11, 12 entgegengewirkt ist. Alternativ kann das Umlaufrädergetriebe 13 auch als Reibradgetriebe ausgeführt sein. Dabei kann die korrekte Positionierung der Stellelemente 11, 12 durch die Verwendung zusätzlicher Sensoren kontrolliert werden.

In der Grundstellung gemäß der Figuren 1 und 2 wird ein auf der Zuführbahn 4 zugeführtes Gebinde 2 zwischen den beiden Stellelementen 11, 12 hindurch der fünften Abfuhrbahn 9 zugeführt. Das Gebinde 2 wird hierbei nicht umgelenkt, so dass die Zuführrichtung Z zugleich einer Transportrichtung T entspricht. Zwischen der Mittelebene M und der Sortierstellungsebene G ist in der Grundstellung ein Sortierwinkel α gleich 90° gebildet.

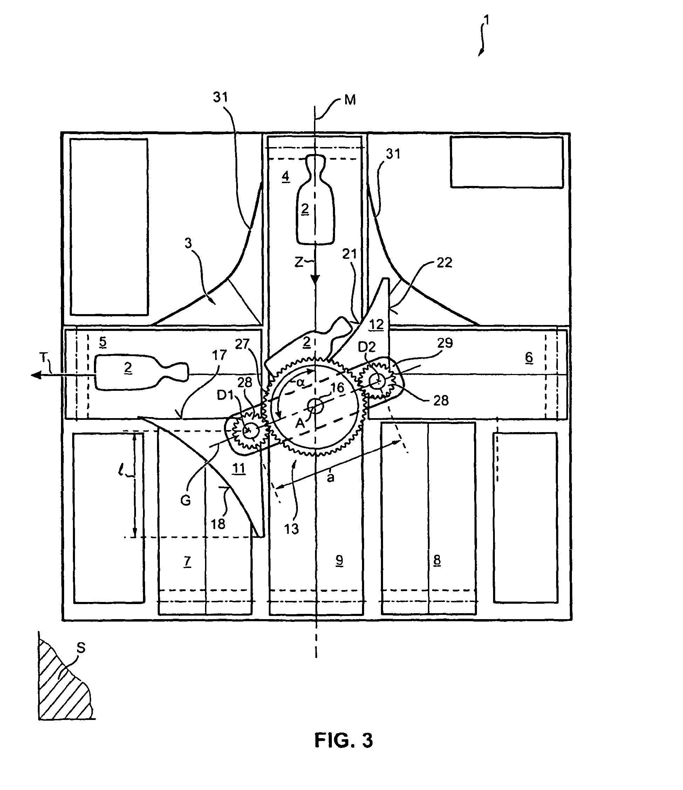

Durch Rotation der Abtriebswelle 16 um ca. 20° im Gegenuhrzeigersinn werden die Stellelemente 11, 12 aus der Grundstellung in eine erste Sortierstellung gemäß Figur 3 verbracht. Hierbei schließen die Sortierstellungsebene G und die Mittelebene M den Sortierwinkel α von ca. 110° ein.

Der drehfest mit der Abtriebswelle 16 verbundene Hebel 29 führt die Planetenräder 28 entlang der eine Führungsbahn 30 vorgebenden Kulisse 27. Hierbei werden die Planetenräder 28 entsprechend einer Übersetzung zwischen dem Sonnenrad 27 und den Planetenrädern 28 mit den Stellelementen 11, 12 um die Schwenkachse D1, D2 derselben gedreht. Infolge der Antriebsbewegung führen die Stellelemente 11, 12 demzufolge eine gekoppelte Dreh- und Schwenkbewegung aus: Die Schwenkachse D1, D2 der Stellelemente 11, 12 werden entlang der Führungsbahn 30 verschwenkt. Gleichzeitig rollen die drehbar an dem Hebel 29 gehaltenen Planetenräder 28 auf der Kulisse 27 ab, so dass die drehfest mit den Planetenrädern 28 verbundenen Stellelemente 11, 12 eine der Schwenkbewegung überlagerte Drehbewegung um die Schwenkachse D1, D2 ausführt. Der Rotationswinkel der Drehbewegung um die Schwenkachse D1, D2 ist hierbei vom Übersetzungsverhältnis des Umlaufrädergetriebes bestimmt und ist im vorliegenden Ausführungsbeispiel größer als der Schwenkwinkel: Die Stellelemente 11, 12 werden um 90° im Gegenuhrzeigersinn um die Schwenkachse D1, D2 gedreht, während die Stellelemente 11, 12 eine Schwenkbewegung von ca. 20° um die Zentralachse A des Sortiermoduls 3 ausführen.

In der ersten Sortierstellung wird das Gebinde 2 entlang der dritten Leitfläche 22 des mit dem spitzen Endbereich 23 über die Zuführbahn 4 geschwenkten zweiten Stellelements 12 um die in Transportrichtung T vor dem spitzen Endbereich 23 des zweiten Stellelements 12 angeordnete, die dritte Abfuhrbahn 7 sperrende erste Leitfläche 17 des ersten Stellelements 11 der ersten Abfuhrbahn 5 zugeführt. Das Gebinde 2 wird hierbei um 90° in Bezug auf die Zuführrichtung Z umgelenkt und unter Anlage an die in Eingriff befindlichen Leitflächen 17, 22 geführt. Die spitzen Endbereiche 23, 23' der Stellelemente 11, 12 weisen hierbei gemeinsam in die Transportrichtung T. Der stumpfe Verbindungsabschnitt 32 des ersten Stellelementes 11 weist in Zuführrichtung Z. Der stumpfe Verbindungsabschnitt 32' des zweiten Stellelements 12 ist gegen die Zuführrichtung Z orientiert ausgerichtet.

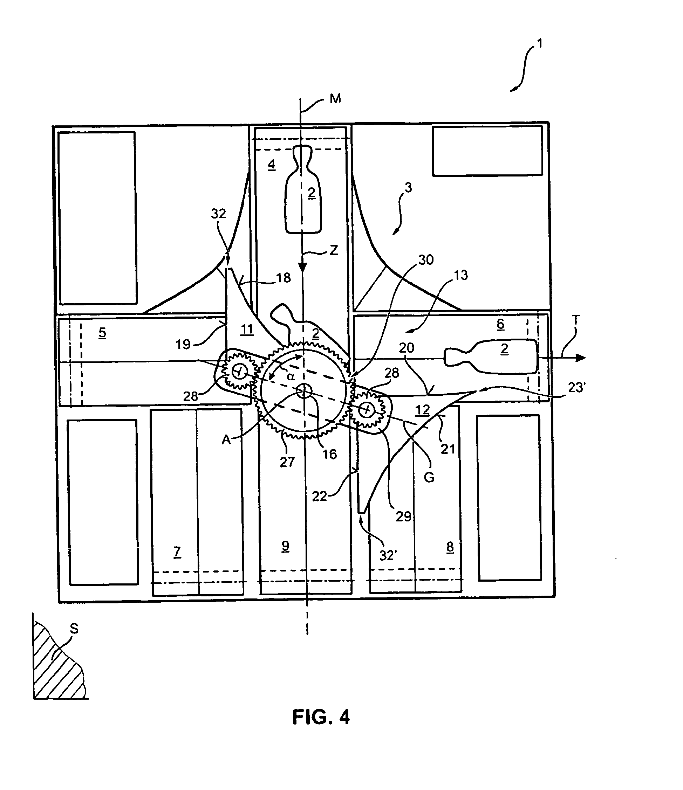

In einer zweiten Sortierstellung gemäß Figur 4, die bezüglich der Mittelebene M spiegelverkehrt zur ersten Sortierstellung ausgebildet ist, wird ein Gebinde 2 entlang der zweiten Leitfläche 18 des mit dem spitzen Endbereich 23 über die Zuführbahn 4 geschwenkten ersten Stellelements 11 und der in Transportrichtung T vor dem spitzen Endbereich 23 des ersten Stellelements 11 angeordneten, einen die vierte Abfuhrbahn 8 sperrenden ersten Leitfläche 20 des zweiten Stellelements 12 der zweiten Abfuhrbahn 6 zugeführt. Zur Verbringung der Stellelemente 11, 12 in die zweite Sortierstellung wird die Abtriebswelle 16 der Antriebseinheit 10 aus der Grundstellung um ca. 20° im Uhrzeigersinn bzw. aus der ersten Sortierstellung um ca. 40° im Uhrzeigersinn gedreht. Die Sortierstellungsebene G schließt hierbei mit der Mittelebene M dem Sortierwinkel α von ca. 70° ein.

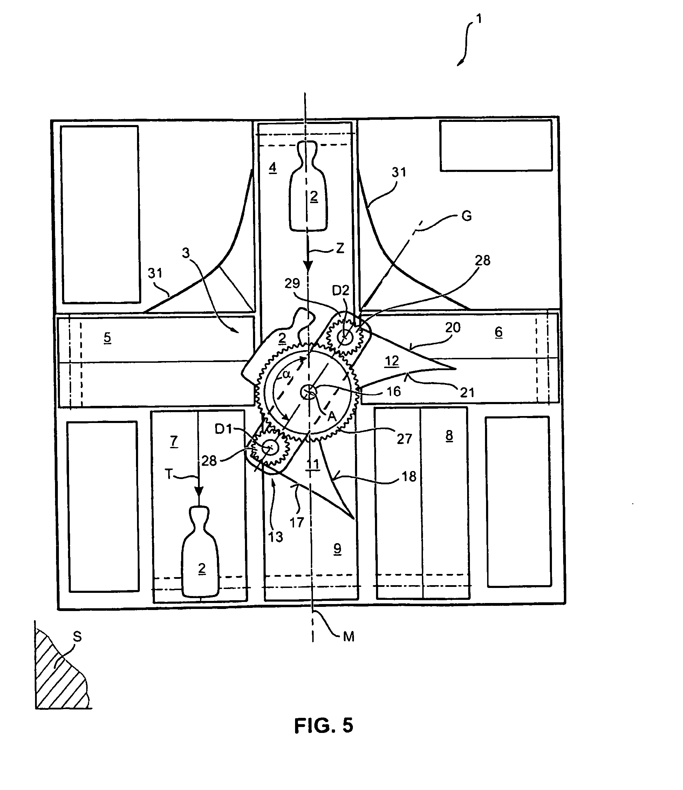

In einer dritten Sortierstellung gemäß Figur 5 wird das Gebinde 2, welches dem Sortiermodul 3 in Zuführrichtung Z auf der Zuführbahn 4 zugeführt wird, entlang der dritten Leitfläche 19 des ersten Stellelements 11 und/oder entlang der dritten Leitfläche 22 des zweiten Stellelements 12 in Richtung der dritten Abfuhrbahn 7 geführt. Die dritten Leitflächen 19, 22 der Stellelemente 11, 12 bilden hierbei eine gemeinsame Bande, wobei die Stellelemente 11, 12 unter Eingriff der Zähne 24, 24' in die korrespondierenden Ausnehmungen 25, 25' des jeweils anderen Stellelements 11, 12 ineinander gedreht sind. Der Sortierwinkel α beträgt hierbei ca. 150°. Die spitzen Endbereiche 23 der Stellelemente 11, 12 weisen in der dritten Sortierstellung in Richtung der zweiten bzw. vierten Abfuhrbahn 6, 8. Der stumpfe Verbindungsabschnitt 32 des ersten Stellelements 11 ist hierbei in Richtung der Schwenkachse D2 des zweiten Stellelements, der stumpfe Verbindungsabschnitt 32' des zweiten Stellelements 12 in Richtung der Schwenkachse D1 des ersten Stellelements 11 orientiert. Die Transportrichtung der von dem Sortiermodul 3 umgelenkten Gebinde 2 entspricht hierbei der Zuführrichtung Z, jedoch erfolgt der Abtransport der Gebinde 2 seitlich versetzt zur Zuführrichtung Z.

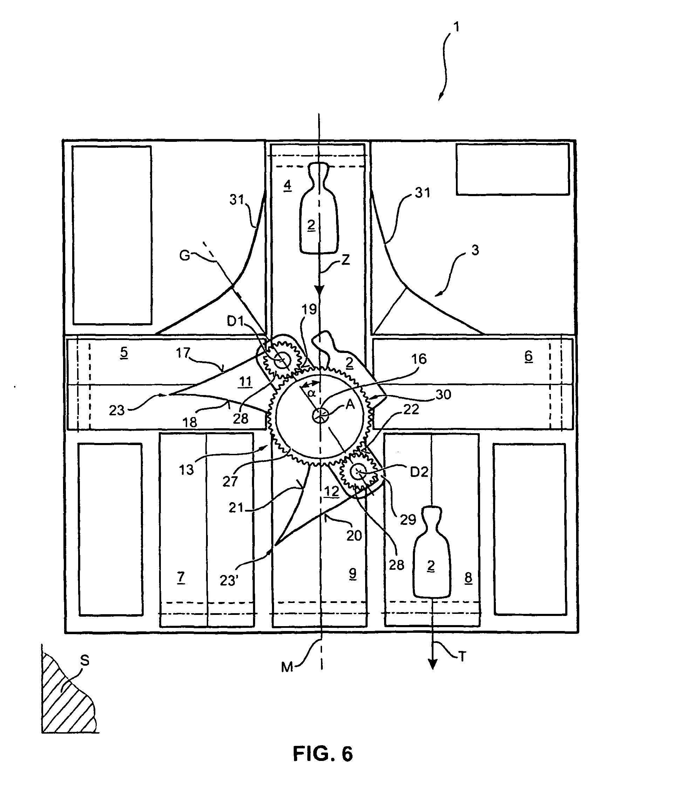

Eine vierte Sortierstellung gemäß Figur 6 ist bezüglich der Mittelebene M spiegelverkehrt zur dritten Sortierstellung gebildet. In der vierten Sortierstellung wird das Gebinde 2 von der Zuführbahn 4 in Richtung einer vierten Abfuhrbahn 8 geleitet. Hierbei bilden die dritten Leitflächen 19, 22 der Stellelemente 11, 12 in der von der dritten Sortierstellung bekannten Weise - das heißt unter Eingriff der Zähne 24, 24' in die korrespondierenden Ausnehmungen 25', 25 des jeweils anderen Stellelements 11, 12 eine gemeinsame Bande, entlang derer das Gebinde 2 geführt ist. Der Sortierwinkel α beträgt im vorliegenden Fall ca. 30°.

Um ein kollisionsfreies Rotieren der Stellelemente 11, 12 und insbesondere die Positionierung der Stellelemente 11, 12 in der dritten bzw. vierten Sortierstellung zu ermöglichen, ist ein Abstand a der Schwenkachsen D1, D2 größer als eine freie Länge I der dritten Leitflächen 19, 22 gewählt.

Allgemein gilt, dass ein Gebinde 2 bei einem Sortierwinkel α kleiner 90° in Zuführrichtung Z gesehen nach links und bei einem Sortierwinkel α größer 90° in Zuführrichtung Z gesehen nach rechts umgelenkt wird. Bei einem Sortierwinkel α gleich 90°, der in der Grundstellung eingenommen wird, wird das Gebinde 2 ohne Richtungsumlenkung der fünften Abfuhrbahn 9 zugeführt. Die Grundstellung wird demzufolge auch als fünfte Sortierstellung bezeichnet.

Um sicherzustellen, dass das Gebinde 2 während des Sortierens sicher auf den diversen Fördermitteln 4, 5, 6, 7, 8, 9 geführt und gegen ein seitliches Herabgleiten gesichert ist, sind seitlich an den Fördermitteln 4, 5, 6, 7, 8, 9 eine Mehrzahl von feststehenden Leitelementen 31 angeordnet, die als Banden fungieren.

Nach einer alternativen nicht dargestellten Ausführungsform der Erfindung kann die Übertragungseinheit 13 eine linear ausgebildete Kulisse als drittes Führungsmittel 27 aufweisen, an dem sich ein als zweites Führungsmittel 28 dienendes Zahnrad in bekannter Weise abstützt. Das Zahnrad 28 ist an einem linear geführten ersten Führungsmittel 29 drehfest gehalten. Das erste Führungsmittel 29 ist starr mit der Antriebseinheit 10 verbunden. Es kann sich hierbei beispielsweise um eine Zahnstange handeln, die mit einem auf der Abtriebswelle 16 befestigten Ritzel kämmt. Ebenso ist denkbar, einen Linearmotor als Antriebseinheit 10 vorzusehen, der direkt mit dem ersten Führungsmittel 29 gekoppelt ist.

Gleiche Bauteile und Bauteilfunktionen sind mit den gleichen Bezugszeichen versehen.

Nach der alternativen Ausführungsform werden die Stellelemente 11, 12 in bekannter Weise um die Drehachse D1, D2 gedreht. Statt der Schwenkbewegung um die Zentralachse A des Sortiermoduls 3 ist die Führungsbahn 30 linear ausgebildet, so dass der Rotation um die Schwenkachse D1, D2 eine Linearbewegung des Stellelements 11, 12 überlagert ist.

### Bezugszeichenliste

- 1: Vorrichtung
- 2: Gebinde
- 3: Sortiermodul
- 4: Zuführbahn
- 5: Abfuhrbahn
- 6: Abfuhrbahn
- 7: Abfuhrbahn
- 8: Abfuhrbahn
- 9: Abfuhrbahn
- 10: Antriebseinheit
- 11: erstes Stellelement
- 12: zweites Stellelement
- 13: Übertragungseinheit
- 14: Elektromotor
- 15: Winkelgetriebe
- 16: Abtriebswelle
- 17: erste Leitfläche
- 18: zweite Leitfläche
- 19: dritte Leitfläche
- 20: erste Leitfläche
- 21: zweite Leitfläche
- 22: dritte Leitfläche
- 23, 23': Eckbereich
- 24, 24': Zähne
- 25, 25': Ausnehmungen
- 26: Sortiermodulträger
- 27: drittes Führungsmittel (Ku- lisse)
- 28: zweites Führungsmittel (Planetenrad)
- 29: erstes Führungsmittel (He- bel)
- 30: Führungsbahn
- 31: Leitelement
- 32, 32': Verbindungsabschnitt

- I: freie Länge
- a: Abstand D1-D2
- α: Sortierwinkel
- T: Transportrichtung
- G: Sortierstellungsebene
- D1: Schwenkachse
- D2: Schwenkachse
- h: Höhe
- A: Zentralachse
- M: Mittelebene
- S: Sortierebene
- Z: Zuführrichtung

## Patentansprüche

1. Vorrichtung zum Sortieren von Gebinden mit einem Sortiermodul, das zwischen einer das Gebinde zuführenden Zuführbahn und einer Mehrzahl von Abfuhrbahnen angeordnet und mittels einer Antriebseinheit antreibbar ist, wobei das Sortiermodul ein Stellelement mit wenigstens einer Leitfläche aufweist zur Führung des Gebindes in Richtung einer vorgegebenen Abfuhrbahn und wobei das Stellelement senkrecht zu einer die Zuführbahn und die Abfuhrbahnen aufnehmenden Sortierebene um eine Schwenkachse drehbar angeordnet ist, und mit einer zwischen der Antriebseinheit (10) und dem Stellelement (11, 12) angeordneten Übertragungseinheit (13) zur Übertragung einer Antriebsbewegung der Antriebseinheit (10) auf das Stellelement (11, 12) einwirkt wobei die Schwenkachse (D1, D2) des Stellelements (11, 12) unter Verdrehung desselben um die Schwenkachse (D1, D2) entlang einer vorgegebene Führungsbahn (30) geführt ist zur Verbringung des Stellelements (11, 12) von einer ersten Sortierstellung, in der die Zuführbahn (4) mit einer ersten Abfuhrbahn (5, 6, 7, 8, 9) verbunden ist, in eine zweite Sortierstellung, in der die Zuführbahn (4) mit einer zweiten Abfuhrbahn (5, 6, 7, 8, 9) verbunden ist ,**dadurch gekennzeichnet, dass** die Übertragungseinheit (13) ein mit der Antriebseinheit (10) gekoppeltes erstes Führungsmittel (29) und ein mit dem Stellelement (11, 12) drehfest verbundenes zweites Führungsmittel (28) aufweist, wobei das zweite Führungsmittel (28) drehbar an dem ersten Führungsmittel (29) gehalten ist, und dass die Übertragungseinheit (13) ein ortsfest angeordnetes drittes Führungsmittel (27) aufweist, das derart mit dem zweiten Führungsmittel (28) zusammenwirkt, dass das Stellelement (11, 12) zwischen der ersten Sortierstellung und der zweiten Sortierstellung um einen vorgegebenen Winkel verdreht ist und dass die Übertragungseinheit als ein Umlaufgetriebe (13), die ortsfeste Kulisse (27) als ein Sonnenrad und das zweite Führungsmittel (28) als ein um das Sonnenrad (ortsfeste Kulisse 27) kreisendes, um die Schwenkachse (D1, D2) des Stellelements (11, 12) drehendes Planetenrad (28) ausgebildet ist, wobei das zweite Führungsmittel (28) über das als ein Hebel (29) ausgebildetes erste Führungsmittel mit einer Abtriebswelle (16) der Antriebseinheit (10) verbunden ist.

2. Vorrichtung nach Anspruch 1, **dadurch gekennzeichnet, dass** das dritte Führungsmittel als eine sich entlang der Führungsbahn (30) erstreckende Kulisse (27) ausgebildet ist, wobei das zweite Führungsmittel (28) form- oder kraftschlüssig an der Kulisse (27) geführt ist.

3. Vorrichtung nach einem der Ansprüche 1 bis 2, **dadurch gekennzeichnet, dass** das Sonnenrad (27) und die Abtriebswelle (16) der Antriebseinheit (10) koaxial auf einer gemeinsamen Zentralachse (A) angeordnet sind.

4. Vorrichtung nach einem der Ansprüche 1 bis 3, **dadurch gekennzeichnet, dass** das Sonnenrad (27) und das Planetenrad (28) als Zahnräder ausgebildet sind.

5. Vorrichtung nach einem der Ansprüche 1 bis 4, **dadurch gekennzeichnet, dass** zwei Stellelemente (11, 12) vorgesehen sind, die winkelgleich und drehrichtungsgleich verschwenkbar geführt sind.

6. Vorrichtung nach einem der Ansprüche 1 bis 5, **dadurch gekennzeichnet, dass** den zwei Stellelementen (11, 12) jeweils ein Planetenrad (28) zugeordnet ist, welches drehbar an dem gemeinsamen Hebel (29) gehalten und entlang der gemeinsamen Kulisse (27) geführt ist.

7. Vorrichtung nach einem der Ansprüche 1 bis 6, **dadurch gekennzeichnet, dass** die Schwenkachsen (D1, D2) der Stellelemente (11, 12) parallel und in einem gleichen, konstanten Abstand zu der Zentralachse (A) angeordnet sind.

8. Vorrichtung nach einem der Ansprüche 1 bis 7, **dadurch gekennzeichnet, dass** das Stellelement (11, 12) eine in der Sortierebene (S) im Wesentlichen dreieckförmige Kontur aufweist, wobei die Dreiecksseiten jeweils eine Leitfläche (17, 18, 19, 20, 21, 22) bilden, von denen eine erste Leitfläche (17, 20) und eine dritte Leitfläche (19, 22) im Wesentlichen eben ausgebildet und lotrecht zueinander angeordnet sind einerseits und von denen eine die erste Leitfläche (17, 20) und die dritte Leitfläche (19, 22) verbindende zweite Leitfläche (18, 21) konkav geformt ist andererseits, wobei die zweite Leitfläche (18,21) mit der ersten Leitfläche (17, 20) einen langgestreckten, spitz zulaufenden Eckbereich (23, 23') bildet.

9. Vorrichtung nach einem der Ansprüche 1 bis 8, **dadurch gekennzeichnet, dass** das erste Stellelement (11) und das zweite Stellelement (12) in einer Grundstellung symmetrisch bezüglich einer senkrecht zu der Sortierebene (S) orientierten und eine Zuführrichtung (Z) der Zuführbahn (4) aufnehmenden Mittelebene (M) angeordnet sind.

10. Vorrichtung nach einem der Ansprüche 1 bis 9, **dadurch gekennzeichnet, dass** die Schwenkachsen (D1, D2) der Stellelemente (11, 12) außerhalb des Flächenmittelpunkts der Stellelemente (11, 12) angeordnet und in der Grundstellung auf gegenüberliegenden Seiten der Zuführbahn (4) positioniert sind.

11. Vorrichtung nach einem der Ansprüche 1 bis 10, **dadurch gekennzeichnet, dass** die Abtriebswelle (16) der Antriebseinheit (10) senkrecht zur Sortierebene (S) angeordnet ist und/oder sich in der Mittelebene (M) erstreckt.

12. Vorrichtung nach einem der Ansprüche 1 bis 11, **dadurch gekennzeichnet, dass** das zweite Führungsmittel (28) derart auf das dritte Führungsmittel (27) abgestimmt ist und/oder die Leitflächen (17, 18, 19) des ersten Stellelements (11) und die Leitflächen (20, 21, 22) des zweiten Stellelements (12) derart höhenversetzt zueinander angeordnete, sich senkrecht zu der Schwenkachse (D1, D2) erstreckende Ausnehmungen (25, 25') und Zähne (24, 24') aufweisen, dass das Gebinde (2) in Abhängigkeit von einer Drehstellung der Abtriebswelle (16)
- in einer ersten Sortierstellung entlang der zweiten Leitfläche (21) des mit dem spitzen Endbereich (23') über die Zuführbahn (4) geschwenkten zweiten Stellelements (12) und dem in Transportrichtung (T) vor dem spitzen Eckbereich (23') des zweiten Stellelements (12) angeordneten, eine dritte Abfuhrbahn (7) sperrenden ersten Leitfläche (17) des ersten Stellelements (11) einer ersten Abfuhrbahn (5) zuführbar ist,
- in einer zweiten Sortierstellung entlang der zweiten Leitfläche (18) des mit dem spitzen Eckbereich (23) über die Zuführbahn (4) geschwenkten ersten Stellelements (23) und der in Transportrichtung (T) vor dem spitzen Eckbereich (23) des ersten Stellelements (11) angeordneten, eine vierte Abfuhrbahn (8) sperrenden ersten Leitfläche (20) des zweiten Stellelements (12) einer zweiten Abfuhrbahn (6) zuführbar ist,
- in einer dritten Sortierstellung unter Eingriff der Zähne (24) des ersten Stellelements (11) in die Ausnehmung (25') des zweiten Stellelements (12) und der Zähne (24') des zweiten Stellelements (12) in die Ausnehmung (25) des ersten Stellelements (11) entlang der über die Zuführbahn (4) geschwenkten dritten Leitfläche (19) des ersten Stellelements (11) und/oder der dritten Leitfläche (22) des zweiten Stellelements (12) einer dritten Abfuhrbahn (7) zuführbar ist,
- in einer vierten Sortierstellung unter Eingriff der Zähne (24) des ersten Stellelements (11) in die Ausnehmung (25') des zweiten Stellelements (12) und der Zähne (24') des zweiten Stellelements (12) in die Ausnehmung (24') des ersten Stellelements (11) entlang der über die Zuführbahn (4) geschwenkten dritten Leitfläche (19) des ersten Stellelements (11) und/oder der dritten Leitfläche (22) des zweiten Stellelements (12) einer vierten Abfuhrbahn (8) zuführbar ist, oder
- in einer der Grundstellung entsprechenden fünften Sortierstellung zwischen der ersten Leitfläche (17) des ersten Stellelements (11) und der ersten Leitfläche (20) des zweiten Stellelements (12) hindurch einer fünften Abfuhrbahn (9) zuführbar ist.

13. Vorrichtung nach einem der Ansprüche 1 bis 12, **dadurch gekennzeichnet, dass** die Stellelemente (11, 12) aus der Grundstellung durch Drehung der Abtriebswelle (16) um maximal +/- 90° in jede beliebige Sortierstellung verbringbar sind.

## Claims

1. Apparatus for sorting containers, having a sorting module which is arranged between a feed path, which feeds the container, and a plurality of discharge paths and can be driven by means of a drive unit, wherein the sorting module has an adjusting element with at least one directing surface, for guiding the container in the direction of a predetermined discharge path, and wherein the adjusting element is arranged such that it can be rotated about a pivot axis perpendicularly to a sorting plane which accommodates the feed path and the discharge path, and having a transmission unit (13), which is arranged between the drive unit (10) and the adjusting element (11, 12) and is intended for transmitting a drive movement of the drive unit (10) to the adjusting element (11, 12), wherein the pivot axis (D1, D2) of the adjusting element (11, 12), with rotation of the latter about the pivot axis (D1, D2), is guided along a predetermined guide path (30), in order to shift the adjusting element (11, 12) from a first sorting position, in which the feed path (4) is connected to a first discharge path (5, 6, 7, 8, 9), into a second sorting position, in which the feed path (4) is connected to a second discharge path (5, 6, 7,8, 9), **characterized in that** the transmission unit (13) has a first guide means (29), which is coupled to the drive unit (10), and a second guide means (28), which is connected in a rotationally fixed manner to the adjusting element (11, 12), wherein the second guide means (28) is retained in a rotatable manner on the first guide means (29), and **in that** the transmission unit (13) has a fixed-location, third guide means (27), which interacts with the second guide means (28) such that the adjusting element (11, 12) is rotated by a predetermined angle between the first sorting position and the second sorting position, and **in that** the transmission unit is designed as a planetary gear mechanism (13), the fixed-location guide track (27) is designed as a sun wheel and the second guide means (28) is designed as a planet wheel (28), which circulates around the sun wheel (fixed-location guide track 27) and rotates about the pivot axis (D1, D2) of the adjusting element (11, 12), wherein the second guide means (28) is connected to an output shaft (16) of the drive unit (10) via the first guide means, which is designed as a lever (29).

2. Apparatus according to Claim 1, **characterized in that** the third guide means is designed as a guide track (27), which extends along the guide path (30), wherein the second guide means (28) is guided in a form-fitting or force-fitting manner on the guide track (27).

3. Apparatus according to either of Claims 1 and 2, **characterized in that** the sun wheel (27) and the output shaft (16) of the drive unit (10) are arranged coaxially along a common central axis (A).

4. Apparatus according to one of Claims 1 to 3, **characterized in that** the sun wheel (27) and the planet wheel (28) are designed as gearwheels.

5. Apparatus according to one of Claims 1 to 4, **characterized by** the provision of two adjusting elements (11, 12) which are guided such that they can be pivoted at the same angle and in the same direction of rotation.

6. Apparatus according to one of Claims 1 to 5, **characterized in that** the two adjusting elements (11, 12) are each assigned a planet wheel (28), which is retained in a rotatable manner on the common lever (29) and is guided along the common guide track (27).

7. Apparatus according to one of Claims 1 to 6, **characterized in that** the pivot axes (D1, D2) of the adjusting elements (11, 12) are arranged parallel to, and at an equal, constant distance from, the central axis (A).

8. Apparatus according to one of Claims 1 to 7, **characterized in that** the adjusting element (11, 12) has a contour which is essentially triangular in the sorting plane (S), wherein the sides of the triangle each form a directing surface (17, 18, 19, 20, 21, 22), of which a first directing surface (17, 20) and a third directing surface (19, 22) are of essentially planar design and are arranged perpendicularly to one another, on the one hand, and of which a second directing surface (18, 21), which connects the first directing surface (17, 20) and the third directing surface (19, 22), is formed concavely, on the other hand, wherein the second directing surface (18, 21) forms with the first directing surface (17, 20) an elongate corner region (23, 23') which tapers to a point.

9. Apparatus according to one of claims 1 to 8, **characterized in that** the first adjusting element (11) and the second adjusting element (12), in a basic position, are arranged symmetrically in relation to a centre plane (M), which is oriented perpendicularly to the sorting plane (S) and accommodates a feed direction (Z) of the feed path (4).

10. Apparatus according to one of Claims 1 to 9, **characterized in that** the pivot axes (D1, D2) of the adjusting elements (11, 12) are arranged outside the surface-area centrepoint of the adjusting elements (11, 12) and, in the basic position, are positioned on opposite sides of the feed path (4).

11. Apparatus according to one of Claims 1 to 10, **characterized in that** the output shaft (16) of the drive unit (10) is arranged perpendicularly to the sorting plane (S) and/or extends along the centre plane (M).

12. Apparatus according to one of Claims 1 to 11, **characterized in that** the second guide means (28) is coordinated with the third guide means (27) in such a manner, and/or the directing surfaces (17, 18, 19) of the first adjusting element (11) and the directing surfaces (20, 21, 22) of the second adjusting element (12) have teeth (24, 24') and recesses (25, 25') extending perpendicularly to the pivot axis (D1, D2) and offset vertically in relation to one another in such a manner that, in dependence on a rotary position of the output shaft (16), the container (2)
- in a first sorting position, can be fed to a first discharge path (5) along the second directing surface (21) of the second adjusting element (12), which is pivoted over the feed path (4) by way of the tapered corner region (23'), and the first directing surface (17) of the first adjusting element (11), this first directing surface being arranged upstream of the tapered corner region (23') of the second adjusting element (12), as seen in the transporting direction (T), and blocking a third discharge path (7),
- in a second sorting position, can be fed to a second discharge path (6) along the second directing surface (18) of the first adjusting element (11), which is pivoted over the feed path (4) by way of the tapered corner region (23), and the first directing surface (20) of the second adjusting element (12), this first directing surface being arranged upstream of the tapered corner region (23) of the first adjusting element (11), as seen in the transporting direction (T), and blocking a fourth discharge path (8),
- in a third sorting position, with engagement of the teeth (24) of the first adjusting element (11) in the recess (25') of the second adjusting element (12) and of the teeth (24') of the second adjusting element (12) in the recess (25) of the first adjusting element (11), can be fed to a third discharge path (7) along the third directing surface (19) of the first adjusting element (11), this third directing surface being pivoted over the feed path (4), and/or the third directing surface (22) of the second adjusting element (12),
- in a fourth sorting position, with engagement of the teeth (24) of the first adjusting element (11) in the recess (25') of the second adjusting element (12) and of the teeth (24') of the second adjusting element (12) in the recess (24') of the first adjusting element (11), can be fed to a fourth discharge path (8) along the third directing surface (19) of the first adjusting element (11), this third directing surface being pivoted over the feed path (4), and/or the third directing surface (22) of the second adjusting element (12), or
- in a fifth sorting position, which corresponds to the basic position, can be fed to a fifth discharge path (9) between the first directing surface (17) of the first adjusting element (11) and the first directing surface (20) of the second adjusting element (12).

13. Apparatus according to one of Claims 1 to 12, **characterized in that** the adjusting elements (11, 12) can be shifted from the basic position into any desired sorting position by the output shaft (16) being rotated by not more than +/-90°.

## Revendications

1. Dispositif destiné à trier des emballages, comprenant un module de tri, qui est disposé entre une bande d'alimentation acheminant l'emballage et une pluralité de bandes d'évacuation et qui peut être entraîné au moyen d'une unité d'entraînement, le module de tri présentant un élément de commande comprenant au moins une surface de guidage pour le guidage de l'emballage dans la direction d'une bande d'évacuation prédéfinie, l'élément de commande étant disposé de manière à pouvoir tourner autour d'un axe de pivotement perpendiculaire à un plan de tirage recevant la bande d'alimentation et les bandes d'évacuation, et agissant avec une unité de transfert (13) disposée entre l'unité d'entraînement (10) et l'élément de commande (11, 12) pour transférer un mouvement d'entraînement de l'unité d'entraînement (10) à l'élément de commande (11, 12), l'axe de pivotement (D1, D2) de l'élément de commande (11, 12) étant guidé par rotation de ce dernier autour de l'axe de pivotement (D1, D2) le long d'une bande de guidage prédéfinie (30) pour amener l'élément de commande (11, 12) d'une première position de tri dans laquelle la bande d'alimentation (4) est connectée à une première bande d'évacuation (5, 6, 7, 8, 9), dans une deuxième position de tri, dans laquelle la bande d'alimentation (4) est connectée à une deuxième bande d'évacuation (5, 6, 7, 8, 9), **caractérisé en ce que** l'unité de transfert (13) présente un premier moyen de guidage (29) accouplé à l'unité d'entraînement (10) et un deuxième moyen de guidage (28) connecté de manière solidaire en rotation à l'élément de commande (11, 12), le deuxième moyen de guidage (28) étant maintenu de manière rotative sur le premier moyen de guidage (29), et **en ce que** l'unité de transfert (13) présente un troisième moyen de guidage (27) disposé fixement, qui coopère avec le deuxième moyen de guidage (28) de telle sorte que l'élément de commande (11, 12) soit tourné entre la première position de tri et la deuxième position de tri suivant un angle prédéfini, et **en ce que** l'unité de transfert est réalisée sous forme d'engrenage planétaire (13), la coulisse fixe (27) sous forme de roue solaire et le deuxième moyen de guidage (28) sous forme d'un pignon planétaire (28) orbitant autour de la roue solaire (coulisse fixe 27), tournant autour de l'axe de pivotement (D1, D2) de l'élément de commande (11, 12), le deuxième moyen de guidage (28) étant connecté par le biais du premier moyen de guidage réalisé sous forme de levier (29) à un arbre de sortie (16) de l'unité d'entraînement (10).

2. Dispositif selon la revendication 1, **caractérisé en ce que** le troisième moyen de guidage est réalisé sous forme de coulisse (27) s'étendant le long de la bande de guidage (30), le deuxième moyen de guidage (28) étant guidé par engagement positif ou par force contre la coulisse (27).

3. Dispositif selon l'une quelconque des revendications 1 à 2, **caractérisé en ce que** la roue solaire (27) et l'arbre de sortie (16) de l'unité d'entraînement (10) sont disposés coaxialement sur un axe central commun (A).

4. Dispositif selon l'une quelconque des revendications 1 à 3, **caractérisé en ce que** la roue solaire (27) et le pignon planétaire (28) sont réalisés sous forme de roues dentées.

5. Dispositif selon l'une quelconque des revendications 1 à 4, **caractérisé en ce que** deux éléments de commande (11, 12) sont prévus, lesquels sont guidés de manière pivotante suivant le même angle et dans le même sens de rotation.

6. Dispositif selon l'une quelconque des revendications 1 à 5, **caractérisé en ce qu'**un pignon planétaire (28) est à chaque fois associé à deux éléments de commande (11, 12), ce pignon planétaire étant maintenu à rotation sur le levier commun (29) et étant guidé le long de la coulisse commune (27).

7. Dispositif selon l'une quelconque des revendications 1 à 6, **caractérisé en ce que** les axes de pivotement (D1, D2) des éléments de commande (11, 12) sont disposés parallèlement et à une distance identique et constante de l'axe central (A).

8. Dispositif selon l'une quelconque des revendications 1 à 7, **caractérisé en ce que** l'élément de commande (11, 12) présente un contour essentiellement triangulaire dans le plan de tri (S), les côtés du triangle formant à chaque fois une surface de guidage (17, 18, 19, 20, 21, 22), dont une première surface de guidage (17, 20) et une troisième surface de guidage (19, 22) sont réalisées essentiellement sous forme plane et d'aplomb l'une par rapport à l'autre d'une part, et dont une deuxième surface de guidage (18, 21) reliant la première surface de guidage (17, 20) et la troisième surface de guidage (19, 22) est formée de manière concave d'autre part, la deuxième surface de guidage (18, 21) formant avec la première surface de guidage (17, 20) une région de coin (23, 23') allongée se terminant en pointe.

9. Dispositif selon l'une quelconque des revendications 1 à 8, **caractérisé en ce que** le premier élément de commande (11) et le deuxième élément de commande (12) sont disposés, dans une position de base, symétriquement par rapport à un plan médian (M) orienté perpendiculairement au plan de tri (S) et contenant une direction d'alimentation (Z) de la bande d'alimentation (4).

10. Dispositif selon l'une quelconque des revendications 1 à 9, **caractérisé en ce que** les axes de pivotement (D1, D2) des éléments de commande (11, 12) sont disposés en dehors du centre de surface des éléments de commande (11, 12) et sont positionnés dans la position de base sur des côtés opposés de la bande d'alimentation (4).

11. Dispositif selon l'une quelconque des revendications 1 à 10, **caractérisé en ce que** l'arbre de sortie (16) de l'unité d'entraînement (10) est disposé perpendiculairement au plan de tri (S) et/ou s'étend dans le plan médian (M).

12. Dispositif selon l'une quelconque des revendications 1 à 11, **caractérisé en ce que** le deuxième moyen de guidage (28) est adapté au troisième moyen de guidage (27) et/ou les surfaces de guidage (17, 18, 19) du premier élément de commande (11) et les surfaces de guidage (20, 21, 22) du deuxième élément de guidage (12) présentent des évidements (25, 25') et des dents (24, 24') disposés de manière décalée en hauteur les uns par rapport aux autres, s'étendant perpendiculairement à l'axe de pivotement (D1, D2), de telle sorte que l'emballage (2) puisse être acheminé en fonction d'une position de rotation de l'arbre de sortie (16)
- dans une première position de tri le long de la deuxième surface de guidage (21) du deuxième élément de commande (12) pivoté avec la région d'extrémité pointue (23') sur la bande d'alimentation (4) et de la première surface de guidage (17) du premier élément de commande (11) disposée dans la direction de transport (T) avant la région de coin pointue (23') du deuxième élément de commande (12), bloquant une troisième bande de sortie (7), à une première bande de sortie (5),
- dans une deuxième position de tri le long de la deuxième surface de guidage (18) du premier élément de commande (23) pivoté avec la région d'extrémité pointue (23) sur la bande d'alimentation (4) et de la première surface de guidage (20) du deuxième élément de commande (12) disposée dans la direction de transport (T) avant la région de coin pointue (23) du premier élément de commande (11), bloquant une quatrième bande de sortie (8), à une deuxième bande de sortie (6),
- dans une troisième position de tri, par engagement des dents (24) du premier élément de commande (12) et des dents (24') du deuxième élément de commande (12) dans l'évidement (25) du premier élément de commande (11), le long de la troisième surface de guidage (19) du premier élément de commande (11) pivotée sur la bande d'alimentation (4) et/ou de la troisième surface de guidage (22) du deuxième élément de commande (12), à une troisième bande de sortie (7),
- dans une quatrième position de tri, par engagement des dents (24) du premier élément de commande (11) dans l'évidement (25') du deuxième élément de commande (12) et des dents (24') du deuxième élément de commande (12) dans l'évidement (24') du premier élément de commande (11) le long de la troisième surface de guidage (19) du premier élément de commande (11) pivotée sur la bande d'alimentation (4) et/ou de la troisième surface de guidage (22) du deuxième élément de commande (12), à une quatrième bande de sortie (8), ou
- dans une cinquième position de tri correspondant à la position de base, entre la première surface de guidage (17) du premier élément de commande (11) et la première surface de guidage (20) du deuxième élément de commande (12), à une cinquième bande de sortie (9).

13. Dispositif selon l'une quelconque des revendications 1 à 12, **caractérisé en ce que** les éléments de commande (11, 12) peuvent être amenés de la position de base par rotation de l'arbre de sortie (16) de ± 90° maximum, dans chaque position de tri quelconque.
